# EUROPEAN PATENT APPLICATION

(11) **EP 1 808 921 A1**
(43) Date of publication of application: **18.07.2007**
(21) Application number: 05790519.2
(22) Date of filing: 04.10.2005
(51) Int. Cl.: H01M 8/02, H01M 8/04, H01M 8/10

(54) **FUEL CELL**

(30) Priority: 08.10.2004 JP 2004296223
(71) Applicant: KABUSHIKI KAISHA TOSHIBA, Tokyo 105-8001 (JP)
(72) Inventor: NEGISHI, Nobuyasu, 1-1, Shibaura 1-chome Minato-ku Tokyo 105-8001 (JP); TAKAHASHI, Kenichi, 1-1, Shibaura 1-chome Minato-ku Tokyo 105-8001 (JP); KAN, Hirofumi, 1-1, Shibaura 1-chome Minato-ku Tokyo 105-8001 (JP)
(74) Representative: Maury, Richard Philip
(86) International application number: PCT/JP2005/018337
(87) International publication number: WO 2006/040961

(57) **Abstract**

The present invention provides a fuel cell comprising: a cathode catalyst layer 2; an anode catalyst layer 3; a proton conductive membrane 6 disposed between the cathode catalyst layer 2 and the anode catalyst layer 3; a liquid fuel tank 9 for storing a liquid fuel L; a fuel vaporizing layer 10 for supplying a vaporized component of the liquid fuel to the anode catalyst layer 3; and a vaporized fuel chamber 12 formed between the fuel vaporizing layer 10 and the anode catalyst layer 3; wherein the vaporized fuel chamber 12 is provided with an internal pressure releasing mechanism 20 for discharging a generated gas including carbon dioxide gas, that is generated at the anode catalyst layer 3, from a side wall of the vaporized fuel chamber 12 to outside a cell body.

## Description

### Technical Field

The present invention relates to a fuel cell having a system in which a vaporized fuel obtained by vaporizing a liquid fuel is supplied to an anode catalyst layer. More particularly, the present invention relates to a fuel cell capable of appropriately releasing carbon dioxide gas generated at the anode catalyst layer in accordance with progress of a cell reaction, and exhibiting less deterioration of cell output characteristic due to an inner pressure rise caused by the carbon dioxide gas.

### Background Art

In recent years, various electronic devices such as personal computer, cellular phone or the like have been manufactured to be miniature in size in accordance with a remarkable development of semiconductor technique, and a fuel cell has been tried to be adopted as a power source for these small-sized electronic devices. The fuel cell has advantages such that it can generate an electrical power by only being supplied with the fuel and the oxidizing reagent, and the power generating operation can be continuously performed as far as only the fuel is supplied to the cell. Due to above advantages, when the miniaturization of the fuel cell is realized, it can be said that the fuel cell is a really advantageous system.

In particular, a direct methanol fuel cell (DMFC) uses methanol having a high energy density as the fuel, and can directly extract a current from methanol at an electrode catalyst. Therefore, the fuel cell can be formed in a compact size, and a handling of the fuel is safe and easy in comparison with a hydrogen gas fuel, so that the fuel cell has been expected as a power source for the compact electronic devices.

As a method of supplying the fuel into DMFC, the following types have been adopted. Namely, there are: a gas-fuel supplying type DMFC in which a liquid fuel is vaporized and the vaporized fuel gas is supplied into the fuel cell by means of a blower or the like; a liquid-fuel supplying type DMFC in which a liquid fuel is supplied, as it is, into the fuel cell by means of a pump or the like; and an internal-vaporizing type DMFC as disclosed in a patent document 1 (Japanese Patent No. 3413111).

The internal-vaporizing type DMFC shown in the patent document 1 comprises: a fuel penetrating layer for retaining the liquid fuel; and a fuel vaporizing layer for vaporizing the liquid fuel and diffusing a vaporized component of the liquid fuel retained in the fuel penetrating layer, so that the vapor of the liquid fuel is supplied from the fuel vaporizing layer to a fuel pole (anode). In the fuel cell of the patent document 1, there is used a methanol aqueous solution as the liquid fuel prepared by mixing methanol with water at a molar ratio of 1:1, and both the methanol and water in a form of a vaporized gas mixture is supplied to the fuel pole.

According to the conventional internal-vaporizing type DMFC shown in the patent document 1, a sufficiently high output power characteristic could not be obtained. Concretely, a vapor pressure of water is relatively lower than that of methanol, and a vaporization rate of water is relatively slow in comparison with that of methanol. Therefore, when the methanol together with water are tried to be supplied to the fuel pole, a supplying amount of water with respect to that of methanol becomes relatively deficient. As a result, a resistance of a reaction for internal reforming of methanol is disadvantageously increased, so that the sufficiently high output power characteristic could not be obtained.

Further, according to the above conventional internal-vaporizing type DMFC shown in the patent document 1, in order to prevent methanol from leaking outside of the fuel cell, a pathway ranging from a liquid fuel tank to the anode catalyst layer is formed to be almost air-tightly. As the result of a decomposing reaction of the methanol or the like at the anode catalyst layer, carbon dioxide gas (CO₂ gas) is generated, and the amount of the generated CO₂ gas is increased in proportional to an increase of an electricity generation amount. Accordingly, an internal pressure in the vaporized fuel chamber formed between the fuel vaporizing layer and the anode catalyst layer is increased as time elapsed, and a partial pressure of the vaporized fuel gas is relatively decreased, so that the fuel supplying amount to be supplied to the anode catalyst layer is decreased. As a result, there has been posed a problem such that the output power of the fuel cell is disadvantageously lowered.

### Disclosure of Invention

The present invention has been achieved to solve the above conventional problems, and an object of the present invention is to stabilize and improve the output power characteristic of the compact fuel cell having a system in which the vaporized component of the liquid fuel is supplied to the anode catalyst layer. Particularly, the object of the present invention is to provide a fuel cell capable of appropriately releasing carbon dioxide gas generated at the anode catalyst layer in accordance with progress of a cell reaction, and exhibiting less deterioration of cell output characteristic due to an inner pressure rise caused by the carbon dioxide gas.

To achieve the above object, the present invention provides a fuel cell comprising: a cathode catalyst layer; an anode catalyst layer; a proton conductive membrane disposed between the cathode catalyst layer and the anode catalyst layer; a liquid fuel tank for storing a liquid fuel; a fuel vaporizing layer for supplying a vaporized component of the liquid fuel to the anode catalyst layer; and a vaporized fuel chamber formed between the fuel vaporizing layer and the anode catalyst layer; wherein the vaporized fuel chamber is provided with an internal pressure releasing mechanism for discharging a generated gas including carbon dioxide gas, that is generated at the anode catalyst layer, from a side wall of the vaporized fuel chamber to outside a cell body.

In the above fuel cell, it is preferable that the internal pressure releasing mechanism comprises: a cutout portion formed to the side wall of the vaporized fuel chamber; and an elastic body provided so as to be tightly contactable to the cutout portion.

Further, in the above fuel cell, it is preferable to configure the fuel cell such that the internal pressure releasing mechanism comprises: a groove formed to the side wall of the vaporized fuel chamber; and an elastic body provided so as to be tightly contactable to the groove.

Furthermore, in the above fuel cell, it is preferable that the internal pressure releasing mechanism comprises: the side wall of the vaporized fuel chamber; an elastic body provided so as to be tightly contactable to the side wall; and a slit for discharging the generated gas accumulated in the vaporized fuel chamber to outside a cell body, the slit being formed so as to extend in a thickness direction of the elastic body.

Still further, in the above fuel cell, it is preferable that the internal pressure releasing mechanism comprises: a groove formed to the side wall of the vaporized fuel chamber; an elastic body provided so as to be tightly contactable to the groove; and a slit for discharging the generated gas accumulated in the vaporized fuel chamber to outside a cell body, the slit being formed so as to extend in a thickness direction of the elastic body tightly contacted to the groove.

Still furthermore, in the above fuel cell, it is preferable that the elastic body has a hardness ranging from 40 °to 70°in terms of a hardness prescribed in Japanese Industrial Standard (JIS K 6301 A:1997).

Further, in the above fuel cell, it is preferable that the cutout portion formed to a side wall of the vaporized fuel chamber has a width of 1 mm or less.

Furthermore, in the above fuel cell, it is preferable that the vaporized fuel chamber further comprises a guide tube for returning the generated gas discharged from the vaporized fuel chamber to a side of the cathode catalyst layer.

According to the above fuel cell of the present invention, the generated gas including carbon dioxide gas, which is generated at the anode catalyst layer in progress of the cell reaction, can be appropriately released to outside the cell body by the action of the internal pressure releasing mechanism, so that the lowering of the cell output power characteristic due to an internal pressure rise caused by carbon dioxide gas can be effectively suppressed, and there can be provided a fuel cell having a stable output power characteristic.

### Brief Description of the Drawings

FIG 1 is a sectional view schematically showing a structure of a first embodiment of a direct methanol type fuel cell according to the present invention.
FIG. 2 is a sectional view schematically showing a structure of an internal pressure releasing mechanism and showing operations and performances of the internal pressure releasing mechanism at a time of high pressure state and at a time of low pressure state within the vaporized fuel chamber.
FIG. 3 is a sectional view taken along the line III-III of FIG. 1, and schematically showing another structure of the internal pressure releasing mechanism and showing operations and performances of the internal pressure releasing mechanism at a time of high pressure state and at a time of low pressure state within the vaporized fuel chamber.
FIG. 4 is a sectional view schematically showing still another structure of the internal pressure releasing mechanism and showing operations and performances of the internal pressure releasing mechanism at a time of high pressure state and at a time of low pressure state within the vaporized fuel chamber.
FIG. 5 is a sectional view schematically showing yet another structure of the internal pressure releasing mechanism and showing operations and performances of the internal pressure releasing mechanism at a time of high pressure state and at a time of low pressure state within the vaporized fuel chamber.
FIG. 6 is a graphic representation showing variations with time in a pressure of anode and an output power of the direct methanol type fuel cells of Examples 1-2 and Comparative Example.
FIG. 7 is a sectional view schematically showing a structure of another embodiment of a direct methanol type fuel cell according to the present invention.
FIG. 8 is a graph showing a relationship between a width (W) of the cutout portion and a cell voltage in a case where the width (W) of the groove (cutout portion) 21 formed to the internal pressure releasing mechanism 20 shown in FIG. 3 was changed within a range of 0.3 to 5mm.
FIG. 9 is a graph showing a relationship between a hardness of an elastic body and a cell voltage in a case where the hardness of the elastic body constituting the internal pressure releasing mechanism 20b shown in FIG. 4 was changed within a range of 35° to 70°.

### Best Mode for Carrying Out the Invention

As the results of eager researches and developments conducted by the inventors of this invention, the following technical knowledge and findings were obtained. That is, in the fuel cell comprising a fuel vaporizing layer for supplying a vaporized component of the liquid fuel to the anode catalyst layer, when a generated gas containing carbon dioxide gas generated from the anode catalyst layer in accordance with a progress of the cell reaction was appropriately released to outside the cell body through the internal pressure releasing mechanism having a cutout portion or groove formed to a side wall of the vaporized fuel chamber, there could be obtained a fuel cell having a stable output power characteristic and less deterioration of the output power due to an internal pressure rise to be caused by carbon dioxide gas.

Further, when the water generated at a cathode catalyst layer is supplied to the anode catalyst layer through a proton conductive membrane, a reaction resistance of a reaction for internally reforming the fuel can be decreased, so that the output power characteristic of the cell is improved.

In particular, when a state where a water retaining amount of the cathode catalyst layer is larger than that of the anode catalyst layer is created by utilizing the water generated at the cathode catalyst layer, it becomes possible to effectively promote a diffusion reaction for diffusing the generated water to the anode catalyst layer through the proton conductive membrane. Therefore, a water-supplying rate can be increased in comparison with a case where the water-supplying rate depends on only the fuel vaporizing layer, and the reaction resistance of the internal reforming reaction for the fuel can be decreased, so that it was found that the output power characteristic of the fuel cell could be improved.

In addition, the water generated at the cathode catalyst layer can be utilized for the internal reforming reaction of the liquid fuel, which is performed at the anode catalyst layer. Therefore, a process for discharging the water generated at the cathode catalyst layer to outside the fuel cell can be alleviated, and there is no need to provide any special structure for supplying water to the liquid fuel, so that there can be provided a fuel cell having a simple structure.

Further, according to the fuel cell of the present invention, there can be used a highly concentrated fuels such as pure methanol or the like having an excessive stoichiometric ratio. Conventionally, such a highly concentrated fuel cannot have been used theoretically.

Hereunder, a direct methanol fuel cell as one embodiment of the fuel cell according to the present invention will be explained and illustrated in more detail with reference to the attached drawings.

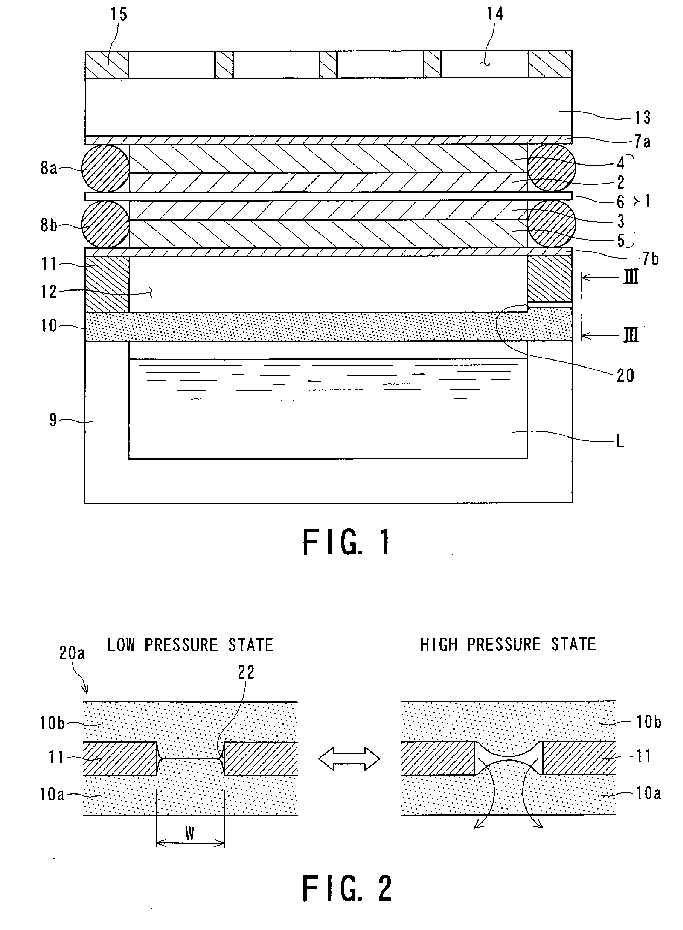

At first, a first embodiment is explained. FIG. 1 is a sectional view schematically showing a structure of the first embodiment of the direct methanol type fuel cell according to the present invention.

As shown in FIG. 1, an membrane electrode assembly (MEA) 1 is configured by comprising: a cathode pole having a cathode catalyst layer 2 and a cathode gas diffusing layer 4; an anode pole having an anode catalyst layer 3 and an anode gas diffusing layer 5; and a proton conductive electrolyte membrane 6 provided at a portion between the cathode catalyst layer 2 and the anode catalyst layer 3.

Examples of a catalyst contained in the cathode catalyst layer 2 and the anode catalyst layer 3 may include: for example, a single substance metal (Pt, Ru, Rh, Ir, Os, Pd or the like) of the platinum group elements; and alloys containing the platinum group elements. As a material for constituting the anode catalyst, Pt-Ru alloy is preferably used. While, as a material for constituting the cathode catalyst, platinum (Pt) is preferably used. However, the materials are not limited thereto. In addition, it is possible to use a support type catalyst using conductive carrier formed of carbon material or the like, and it is also possible to use a non-carrier catalyst.

In addition, examples of a proton conductive material for constituting the proton conductive electrolyte membrane 6 may include: for example, fluoric type resin, such as perfluoro-sulfonic acid, having a sulfonic acid group; hydrocarbon type resin having a sulfonic acid group; and inorganic substances such as tungstic acid, phosphotungstic acid or the like. However, the proton conductive material is not limited thereto.

The cathode gas diffusing layer 4 is laminated on an upper surface side of the cathode catalyst layer 2, and the anode gas diffusing layer 5 is laminated on a lower surface side of the anode catalyst layer 3. The cathode gas diffusing layer 4 fulfills a role of uniformly supplying the oxidizing agent to the cathode catalyst layer 2, and also serves as a collector of the cathode catalyst layer 2. On the other hand, the anode gas diffusing layer 5 fulfills a role of uniformly supplying the fuel to the anode catalyst layer 3, and also serves as a collector of the anode catalyst layer 3.

A cathode conductive layer 7a and an anode conductive layer 7b are respectively contacted to the cathode gas diffusing layer 4 and the anode gas diffusing layer 5. As a material for constituting the cathode conductive layer 7a and the anode conductive layer 7b, for example, a porous layer (for example, mesh member) composed of a metal material such as gold or the like can be used.

A cathode seal member 8a having a rectangular shape is positioned at a portion between the cathode conductive layer 7a and the proton conductive electrolyte membrane 6. Simultaneously, the cathode seal member 8a air-tightly surrounds circumferences of the cathode catalyst layer 2 and the cathode gas diffusing layer 4.

On the other hand, an anode seal member 8b having a rectangular shape is positioned at a portion between the anode conductive layer 7b and the proton conductive electrolyte membrane 6. Simultaneously, the anode seal member 8b air-tightly surrounds circumferences of the anode catalyst layer 3 and the anode gas diffusing layer 5. The cathode seal member 8a and the anode seal member 8b are O-rings for preventing the fuel and the oxidizing agent from leaking from the membrane electrode assembly 1.

Under the membrane electrode assembly 1 is provided with a liquid fuel tank 9. In the liquid fuel tank 9, a liquid fuel L such as a liquid methanol, a methanol aqueous solution or the like are accommodated. At an opening end portion of the liquid fuel tank 9 is provided with a gas-liquid separating membrane 10 as a fuel vaporizing layer 10 such that the opening end portion of the liquid fuel tank 9 is covered with the gas-liquid separating membrane 10. The gas-liquid separating membrane 10 allows only the vaporized component of the liquid fuel to pass therethrough, and not allow the liquid fuel to pass therethrough.

In this connection, the vaporized component of the liquid fuel means a vaporized methanol in a case where the liquid methanol is used as the liquid fuel, while the vaporized component of the liquid fuel means a mixture gas comprising a vaporized component of methanol and a vaporized component of water.

A frame 11 composed of resin is laminated to a portion between the gas-liquid separating membrane 10 and the anode conductive layer 7b. A space enclosed by the frame 11 functions as the vaporized fuel chamber 12 (so called, a vapor retaining pool) for temporally storing the vaporized fuel diffused from the gas-liquid separating membrane 10. Due to an effect of suppressing an amount of methanol passing through the vaporized fuel chamber 12 and the gas-liquid separating membrane 10, it becomes possible to avoid a situation where a large amount of the vaporized fuel is supplied to the anode catalyst layer 3 at a time, so that an occurrence of "methanol crossover" can be effectively suppressed. In this regard, the frame 11 may be formed to have a rectangular shape, and may be formed of thermoplastic polyester resin such as PET (polyethylene terephthalate) or the like.

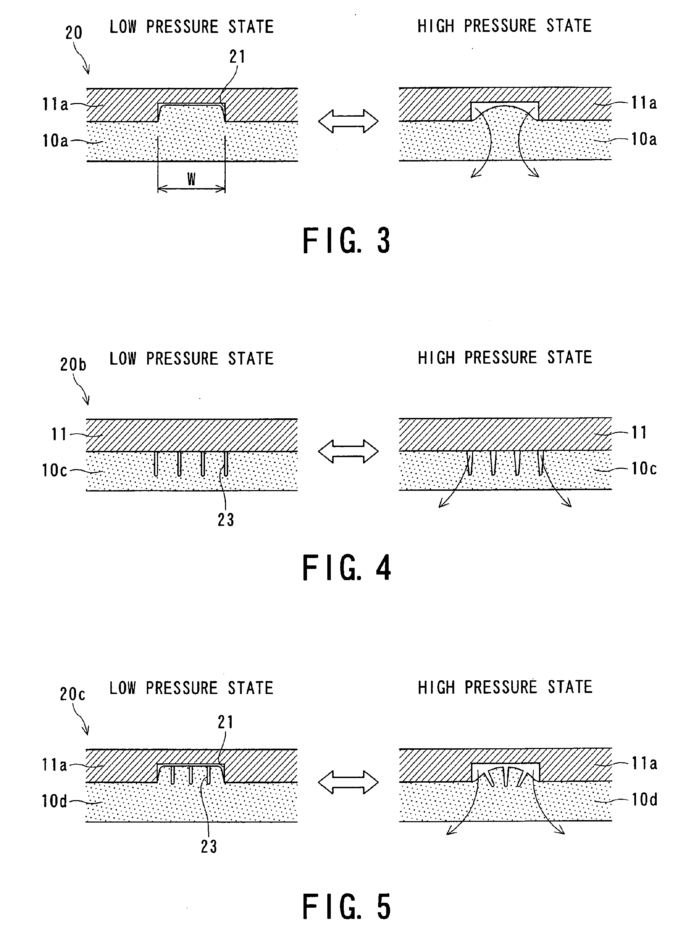

At a side wall of the above vaporized fuel chamber (vapor retaining pool) 12 is provided with an internal pressure releasing mechanism 20 for releasing the generated gas including carbon dioxide gas (CO₂ gas), that is generated at the anode catalyst layer 3, to outside a cell body This internal pressure releasing mechanism 20 is configured, for example, as shown in FIG 3, by comprising: a groove 21 formed to a side wall 11 a of the vaporized fuel chamber 12; and an elastic body 10a arranged to be tightly contactable to the groove 21.

The above internal pressure releasing mechanism 20 is preferably configured by combining a hard member with a soft elastic body capable of being tightly contactable to the hard member. Concretely to say, as a material for constituting the side wall of the above vaporized fuel chamber (vapor retaining pool) 12, the material is not particularly limited. The side wall may be formed of a frame member (seal member) composed of a hard resin member such as PET or the like capable of air-tightly sealing gaps formed between structural parts of the cell, or the side wall may be also formed of a housing of the cell.

On the other hand, as a material for constituting the elastic body, a soft rubber sheet member is suitable. In particular, the fuel vaporizing layer 10 composed of a soft silicon rubber sheet, NBR or the like can be also adopted and served as the elastic body as it is.

A hardness of the elastic body such as rubber or the like is preferably set to a range of 40°- 70°in terms of a hardness prescribed in Japanese Industrial Standard (JIS K 6301 A: 1997). When this elastic body is too soft so as to have the hardness less than 40°, it becomes difficult to form a blow-out nozzle by the elastic body fitted into a cutout portion or the groove formed to the side wall. That is, even if the cutout portion is formed, the elastic body still has a high elasticity, so that the blow-out nozzle is not opened even if the inner pressure rises whereby it becomes difficult to perform a gas releasing operation at a predetermined pressure. In addition, even if the blow-out nozzle is formed, the gas releasing operation is performed at a high pressure, so that there may be a fear that the gas releasing mechanism also functioning as a seal structure of the fuel cell may constitute a starting point of breakage of the fuel cell.

On the other hand, when the elastic body is too hard so as to have the hardness exceeding 70°, a deformability of the elastic body is lowered, and a shape of a rubber as elastic body is maintained as it is, even if the internal pressure is changed, so that it becomes difficult to smoothly seal the cutout portion or the groove. Therefore, the hardness of the elastic body is set within a range of 40°- 70°, and more preferably set within a range of 50°- 60°.

In the internal pressure releasing mechanism 20 shown in FIG. 3, when a pressure within the vaporized fuel chamber 12 is low, the elastic body 10a is tightly fitted into the groove 21 thereby to close the blow-out nozzle as shown in a left side of FIG 3. On the other hand, when a cell reaction is advanced and the carbon dioxide gas generated from the anode catalyst layer 3 is accumulated in the vaporized fuel chamber 12 thereby to increase the inner pressure, the elastic body 10a is deformed to open the blow-out nozzle, so that the generated gas including the carbon dioxide gas is discharged to outside the cell (the cell housing).

Then, when the inner pressure is lowed as a result of the discharging the generated gas to outside the cell, the elastic boy 10a is fitted into the groove 21 thereby to again close the blow-out nozzle. Accordingly, it becomes possible to provide a fuel cell exhibiting less deterioration of cell output characteristic due to the inner pressure rise caused by the carbon dioxide gas, and having a stable output power characteristic.

The above internal pressure releasing mechanism may also be configured so as to comprise: a cutout portion 22 formed to the side wall 11 of the vaporized fuel chamber 12; and two sheets of elastic bodies 10a and 10b provided so as to be tightly contactable to the cutout portion 22, as shown in FIG. 2. The elastic bodies 10a and 10b are provided so as to clamp the cutout portion 22. The operation and effect of this internal pressure releasing mechanism 20a are the same as those of the mechanism shown in FIG. 3.

In the internal pressure releasing mechanisms 20a and 20 shown in FIGS. 2 and 3, it is preferable that the cutout portion 22 or the groove 21 formed to side walls 11 and 11 a of the vaporized fuel chamber have a width W of 1 mm or less. When the width W of the cutout portion 22 or the groove 21 is formed to be excessively large so as to exceed 1 mm, the blow-out nozzle is formed even if the inner pressure is low, so that a leakage of methanol as fuel occurs, and a normal opening-closing operation of the blow-out nozzle cannot be smoothly performed. When the above width W of the groove 21 is set to 1 mm or less, a leaking amount of the fuel at a time when the cell is not operated can be decreased.

Further, as shown in FIG. 4, the above internal pressure releasing mechanism can be also configured so as to comprise: the side wall 11 of the vaporized fuel chamber; an elastic body 10c provided so as to be tightly contactable to the side wall 11; and a slit 23 discharging the generated gas accumulated in the vaporized fuel chamber to outside a cell body, the slit 23 being formed so as to extend in a thickness direction of the elastic body 10c.

A height of the slit 23 formed to the elastic body 10c is preferably set to 3/4 or less of a thickness of the elastic body 10c. Concretely, in a case where the elastic body 10c having a thickness of about 200µm, the height of the slit 23 is preferably set to 150µm or less. When the above height of the slit 23 is excessively large so as to exceed 3/4 of the thickness of the elastic body 10c, a normal opening-closing operation of the blow-out nozzle cannot be smoothly performed by the elastic body 10c. The operation and effect of this internal pressure releasing mechanism 20b are the same as those of the mechanism shown in FIG. 3.

Furthermore, the above internal pressure releasing mechanism can be also configured as shown in FIG. 5. Namely, the internal pressure releasing mechanism 20c may also be structured so as to comprise: a groove 21 formed to the side wall 11 a of the vaporized fuel chamber; an elastic body 10d provided so as to be tightly contactable to the groove 21; and a slit 23 for discharging the generated gas accumulated in the vaporized fuel chamber to outside a cell body, the slit 23 being formed so as to extend in a thickness direction of the elastic body 10d tightly contacted to the groove 21.

According to the internal pressure releasing mechanism 20c, since the slit 23 is formed to the elastic body 10d in addition to the feature of the internal pressure releasing mechanism 20 shown in FIG. 3, the opening-closing operation of the blow-out nozzle for discharging the internal pressure can be further smoothly performed.

By the way, in a right side of each of FIGs. 2 to 5 each showing the operation of the internal pressure releasing mechanism under a state where the internal pressure is high, a gas-releasing path formed at the time of the high internal pressure is drawn in an exaggerated form for the purpose of more easily understanding the present invention. However, in actual, the gas-releasing path has a width of about several tens microns. When the gas-releasing path having this width is opened, the internal pressure is effectively released. Further, although it is difficult to completely seal and close the gas-releasing path (blow-out nozzle) even at the time of a low pressure, a leaking amount of the vaporized fuel can be effectively decreased.

Further, in the fuel cell comprising the above internal pressure releasing mechanism, it is preferable that the vaporized fuel chamber further comprises a guide tube 24 for returning the generated gas discharged from the vaporized fuel chamber 12 to a side of the cathode catalyst layer 2.

In the generated gas discharged from the above vaporized fuel chamber 12, the vaporized fuel such as methanol vapor or the like supplied from the fuel vaporizing layer 10 is contained in addition to the carbon dioxide gas (CO₂) generated from the anode catalyst layer 3. When the generated gas is returned to the side of the cathode catalyst layer 2 through the above guide tube 24, the vaporized fuel as discharged is recovered and reused. Namely, a combustion reaction of the vaporized fuel such as methanol or the like is taken place, so that it becomes possible to increase the cell output power due to a heat generated by the combustion reaction, and it becomes also possible to easily perform a start-up operation of the fuel cell at a low temperature, thus providing an effect of improving the start-up performance.

On the other hand, on the cathode conductive layer 7a laminated on an upper portion of the membrane electrode assembly 1 is laminated with a moisture retaining plate 13. On the moisture retaining plate 13 is laminated with a surface layer 13 formed with a plurality of air-intake ports 14 for introducing air as oxidizing agent. The surface layer 13 performs also a role in increasing a close-contacting property of the membrane electrode assembly 1 by pressing a stack including the membrane electrode assembly 1, so that the surface layer 13 is formed of metal such as SUS304 or the like.

The moisture retaining plate 13 performs a role in suppressing an evaporation of water generated at the cathode catalyst layer 2, and also performs a role as an auxiliary diffusing layer for promoting a uniform diffusion of the oxidizing agent to the cathode catalyst layer 2 by uniformly introducing the oxidizing agent to the cathode gas diffusing layer 4.

According to the first embodiment of the direct methanol type fuel cell as described above, the liquid fuel (for example, methanol aqueous solution) stored in the liquid fuel tank 9 is vaporized, the vaporized methanol and water diffuse in the gas-liquid separating membrane (fuel vaporizing layer) 10, and are once accommodated into the vaporized fuel chamber 12. Then, the vaporized methanol and water gradually diffuse in the anode gas diffusing layer 5 thereby to be supplied to the anode catalyst layer 3. As a result, an internal reforming reaction of methanol is taken place in accordance with the following reaction formula (1).

CH₃OH + H₂O → CO₂ + 6H⁺ + 6e⁻ (1)

Further, in a case where a pure methanol is used as the liquid fuel, there is no water supplied from the fuel vaporizing layer, so that the water generated by the oxidation reaction of the methanol mixed in the cathode catalyst layer 2 or a moisture content or the like in the proton conductive electrolyte membrane 6 reacts with methanol. As a result, the internal reforming reaction in accordance with the reaction formula (1) is taken place, or the internal reforming reaction not depending on the aforementioned reaction formula (1) is taken place in a reaction mechanism without using the water

The carbon dioxide gas (CO₂ gas) is generated at the anode catalyst layer 3 by a decomposing reaction of the fuel such as methanol or the like. The generated carbon dioxide gas is accumulated in the vaporized fuel chamber 12 formed between the fuel vaporizing layer 10 and the anode catalyst layer 3, so that the internal pressure in the vaporized fuel chamber 12 is increased with time.

A proton (H⁺) generated by the above internal reforming reaction diffuses in the proton conductive electrolyte membrane 6, and then arrives at the cathode catalyst layer 3. On the other hand, the air introduced from the air intake port 14 of the surface layer 15 diffuses in both the moisture retaining plate 13 and the cathode gas diffusing layer 4 thereby to be supplied to the cathode catalyst layer 2. In the cathode catalyst layer 2, a reaction shown in the following reaction formula (2) is taken place thereby to generate water. Namely, a power generating reaction is taken place.

(3/2)O₂ + 6H⁺ + 6e⁻ →3H₂O (2)

When the power generating reaction is advanced, the water generated in the cathode catalyst layer 2 in accordance with the reaction formula (2) diffuses in the cathode gas diffusing layer 4, and arrives at the moisture retaining plate 13. An evaporation of the water is inhibited by the moisture retaining plate 13 thereby to increase a water storing amount in the cathode catalyst layer 2. Therefore, in accordance with an advancement of the power generating reaction, there can be realized a state where the moisture retaining amount of the cathode catalyst layer 2 is larger than that of the anode catalyst layer 3.

As a result, due to an osmotic-pressure phenomena, it becomes possible to effectively promote a diffusion reaction for transferring (diffusing) the water generated at the cathode catalyst layer 2 to the anode catalyst layer 3 through the proton conductive electrolyte membrane 6. Therefore, a water-supplying rate to the anode catalyst layer can be increased in comparison with a case where the water-supplying rate depends on only the fuel vaporizing layer, and the internal reforming reaction shown in the reaction formula (1) can be promoted. Therefore, an output power density can be increased and it becomes possible to maintain such a high output power density for a long time period.

On the other hand, the carbon dioxide gas (CO₂ gas) is generated at the anode catalyst layer 3 by the decomposing reaction of the fuel such as methanol or the like. The generated carbon dioxide gas is accumulated in the vaporized fuel chamber 12 formed between the fuel vaporizing layer 10 and the anode catalyst layer 3, so that the internal pressure is increased with time. However, according to the present embodiment, the internal pressure releasing mechanisms 20 - 20c shown in FIGs. 2 to 5 are provided respectively, the carbon dioxide gas generated from the anode catalyst layer in accordance with a progress of the cell reaction is appropriately released to outside the cell body (outside the cell housing) through the internal pressure releasing mechanisms 20 - 20c. Accordingly, a partial pressure of the vaporized gas at the vaporized fuel chamber 12 is not decreased, and an amount of fuel to be supplied to the anode catalyst layer 3 is not lowered, so that the cell output power would not be lowered.

This embodiment will be explained more concretely by taking the internal pressure releasing mechanism 20 shown in FIG 3 as one example. That is, when the pressure within the vaporized fuel chamber 12 is low, the elastic body 10a is fitted into the groove 21 thereby to close the blow-out nozzle as shown in a left side of FIG 3. On the other hand, when a cell reaction is advanced and the carbon dioxide gas generated from the anode catalyst layer 3 is accumulated in the vaporized fuel chamber 12 thereby to increase the inner pressure, the elastic body 10a is deformed to open the blow-out nozzle, so that the generated gas including the carbon dioxide gas is discharged to outside the cell.

Then, when the inner pressure is lowed as a result of the discharging the generated gas to outside the cell, the elastic boy 10a is fitted into the groove 21 thereby to again close the blow-out nozzle. Accordingly, it becomes possible to provide a fuel cell exhibiting less deterioration of cell output characteristic due to the inner pressure rise caused by the carbon dioxide gas, and having a stable output power characteristic.

Furthermore, when a methanol aqueous solution having a concentration exceeding 50 mol% or a pure methanol is used as the liquid fuel, the water diffused from the cathode catalyst layer 2 to the anode catalyst layer 3 is mainly used for the internal reforming reaction, so that an operation for supplying the water to the anode catalyst layer 3 can be stably advanced whereby the reaction resistance of the internal reforming reaction can be further decreased and a long-term output power characteristic and a load current characteristic of the fuel cell can be further improved. In addition, it is also possible to miniaturize a size of the liquid fuel tank. In this connection, a purity of the pure methanol is preferably set to a range from 95 to 100 mass%.

Next, a second embodiment of the direct methanol type fuel cell according to the present invention will be explained and illustrated in more detail with reference to the attached drawings.

This second embodiment of the direct methanol type fuel cell has substantially the same configuration as that of the first embodiment of the direct methanol type fuel cell as described above, except that the moisture retaining plate is not provided to a portion between the cathode gas diffusing layer and the surface layer.

In this second embodiment, a methanol aqueous solution having a concentration of 50 mass% or more or a pure methanol (of which purity is preferably set to a range of 95 -100 mass%) is used as the liquid fuel to be stored in the liquid fuel tank. Therefore, a moisture amount diffused in the gas-liquid separating membrane and supplied to the anode catalyst layer is decreased, or decreased to be almost zero.

On the other hand, water is generated at the cathode catalyst layer in accordance with the reaction shown in the reaction formula (2) as described above, so that an existent amount of the water is increased in accordance with the advancement of the power generating operation. As a result, there can be realized a state where the moisture retaining amount of the cathode catalyst layer is larger than that of the anode catalyst layer As a result, due to osmotic-pressure phenomena, it becomes possible to effectively promote the diffusion of the water from the cathode catalyst layer 2 to the anode catalyst layer 3. As a result, a function of supplying the water to the anode catalyst layer is promoted, and the water-supplying operation is stably performed, so that the internal reforming reaction shown in the reaction formula (1) can be promoted. Therefore, it becomes possible to improve the output power density and a long-term output power characteristic. In addition, it is also possible to miniaturize a size of the liquid fuel tank.

In this connection, the inventors of the present invention had investigated a relationship between a maximum output power and a thickness of the proton conductive electrolyte membrane of the fuel cell in which a perfluoro-carbon type proton conductive electrolyte membrane was used. As a result, in order to realize a high output power, the thickness of the proton conductive electrolyte membrane 6 is preferably set to 100µm or less. The reason why the high output power can be obtained by setting the thickness of the proton conductive electrolyte membrane 6 to 100µm or less is that it becomes possible to further promote the diffusion of water from the cathode catalyst layer 2 to the anode catalyst layer 3.

In this regard, when the thickness of the proton conductive electrolyte membrane 6 is set to less than 10µm, there may be posed a fear that a strength of the proton conductive electrolyte membrane 6 is disadvantageously lowered. Therefore, it is preferable to set the thickness of the proton conductive electrolyte membrane 6 to within a range of 10 - 100µm, more preferable to set to within a range of 10 - 80µm.

The present invention is not particularly limited to the aforementioned respective embodiments, and can be modified as far as the invention adopts a structure in which the water generated at the cathode catalyst layer 2 is supplied to the anode catalyst layer 3 through the proton conductive membrane 6, so that the operation for supplying the water to the anode catalyst layer 3 and the water-supplying operation is stably performed.

Further, the structure of the inner pressure releasing mechanism is not limited to the aforementioned embodiments, and can be modified as far as the invention adopts a structure capable of intermittently discharging the generated gas, including carbon dioxide gas generated at the anode catalyst layer 3, from the inner wall of the vaporized fuel chamber to outside the cell body.

### [Examples]

Hereunder, examples of the present invention will be more concretely explained with reference to the accompanying drawings.

### (Example 1)

### < Preparation of Anode Pole >

Perfluoro-carbon sulfonic acid solution, water and methoxy propanol were added to carbon black supporting anode catalyst (Pt:Ru=1:1), so that a paste in which above the carbon black supporting anode catalyst was dispersed was prepared. Thus prepared paste was coated on a porous carbon paper as an anode gas diffusing layer, thereby to prepare an anode pole comprising an anode catalyst layer having a thickness of 450µm.

### < Preparation of Cathode Pole >

Perfluoro-carbon sulfonic acid solution, water and methoxy propanol were added to carbon black supporting cathode catalyst (Pt), so that a paste in which above the carbon black supporting cathode catalyst was dispersed was prepared. Thus prepared paste was coated on a porous carbon paper as a cathode gas diffusing layer, thereby to prepare a cathode pole comprising a cathode catalyst layer having a thickness of 400µm.

A perfluoro-carbon sulfonic acid membrane (nafion membrane; manufactured by E. I. Du Pont de Nemours & Co.) having a thickness of 30µm and a moisture content of 10 - 20 weight% was provided as a proton conductive electrolyte membrane to a portion between the anode catalyst layer and the cathode catalyst layer, thereby to form a laminated body. Then, the laminated body was subjected to a hot pressing operation thereby to prepare a membrane electrode assembly (MEA).

As a moisture retaining plate, there was prepared a film composed of polyethylene having a thickness of 500µm, an air permeability (prescribed in Japanese Industrial Standard: JIS P-8117) of 2 sec/100 cm³ and a water vapor permeability (JIS L-1099, A-1 method) of 4000g/m224h.

As a frame for constituting the side wall of the vaporized fuel chamber 12, a frame 11 composed of PET and having a rectangular shape and a thickness of 25µm was prepared. Then, as shown in FIG. 3, a part 11 a of the frame 11 was formed with a groove 21 having a width W of 1 mm, thereby to form a blow-out port for releasing an internal pressure. Further, as a member serving as both the gas-liquid separating membrane 10 and the elastic body 10a, a silicon rubber (SR) sheet having a thickness of 100µm was prepared.

By using thus prepared membrane electrode assembly (MEA) 1, the moisture retaining plate 13, the frame 11, 11 a, and the gas-liquid separating membrane 10 (the elastic body 10a), there was assembled an internal vaporization type direct methanol fuel cell according to Example 1 having the aforementioned structure shown in FIG. 1. At this time, 2mL of pure methanol having a purity of 99.9 wt% was injected into the fuel tank 9.

### [Example 2]

The same manufacturing process as in Example 1 was repeated except that the groove 21 was not formed onto the frame 11 and 2-4 rows of slits (cutouts) each having a height of 50µm were formed so that the slits were extending in a thickness direction of the silicon rubber sheet used as the gas-liquid separating membrane 10 (the elastic body 10a) as shown in FIG 4. As a result, a fuel cell according to Example 2 having the substantially same structure as in Example 1 shown in FIG. 1 was assembled.

### [Comparative Example]

The same manufacturing process as in Example 1 was repeated except that the groove 21 was not formed onto the frame 11 and the slits formed in the elastic body in Example 2 were not formed at all. As a result, a fuel cell according to Comparative Example having the substantially same structure as in Example 1 shown in FIG. 1 was assembled.

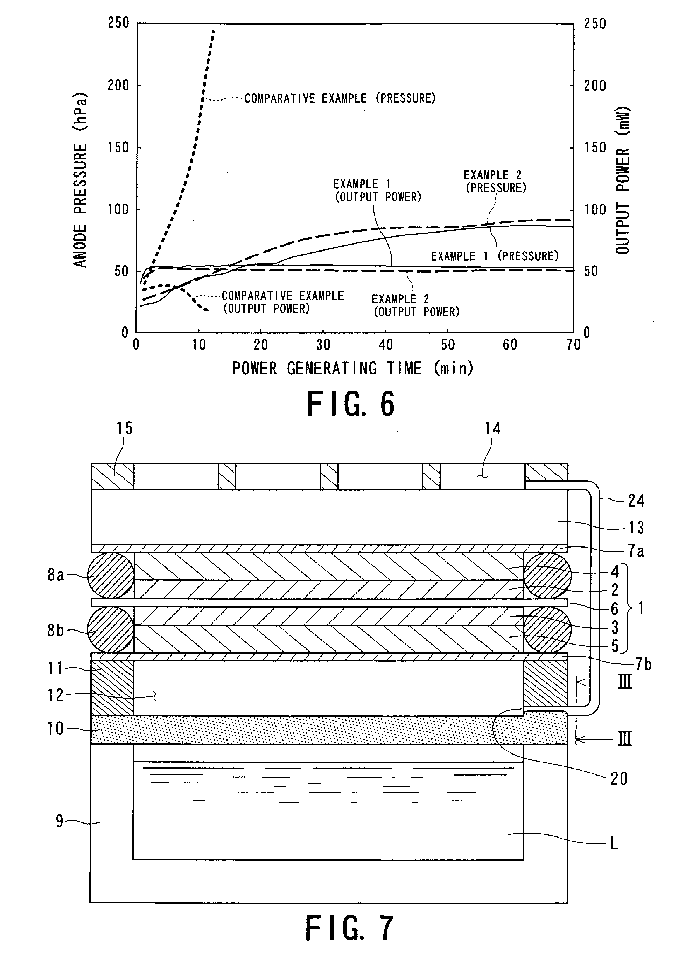

With respect to the fuel cells according to each of the above Examples 1-2 and Comparative Example, a power generating operation at a room temperature was performed under a constant load. That is, changes with time (variation per minute) of an output power of the fuel cell and an internal pressure (anode pressure) within the vaporized fuel chamber 12 were continuously measured. The measuring results are shown in FIG. 6. An abscissa axis in FIG 6 denotes a power generating time, while ordinate axes (vertical axes) denote the anode pressure and the power output value, respectively: In this regard, the anode pressure is expressed as a relative pressure value when the atmospheric pressure is deemed to be zero.

As is clear from the results shown in FIG. 6, according to the fuel cells of Examples 1-2 in which the internal pressure releasing mechanism for discharging the generated gas including carbon dioxide gas, that was generated at the anode catalyst layer, from the side wall of the vaporized fuel chamber to outside the cell, the carbon dioxide gas generated from the anode catalyst layer in accordance with a progress of the cell reaction could be appropriately released to outside the cell body through the internal pressure releasing mechanism. As a result, in comparison with the fuel cell according to Comparative Example having no internal pressure releasing mechanism, It was confirmed that there could be obtained a fuel cell having a stable output power characteristic and less deterioration of the output power due to internal pressure rise to be caused by the carbon dioxide gas.

In contrast, in case of the fuel cell according to Comparative Example having no internal pressure releasing mechanism, the anode pressure was continuously and abruptly increased. Therefore, the partial pressure of the vaporized fuel gas was relatively decreased, so that a fuel amount supplied to the anode catalyst layer was lowered. As a result, it was reconfirmed that there was a tendency of lowering the power output of the cell.

FIG. 7 shows a configuration of a fuel cell in which a guide tube 24 for returning the generated gas discharged from the vaporized fuel chamber 12 to a side of the cathode catalyst layer 2 was provided. In this connection, in the generated gas discharged from the vaporized fuel chamber 12, a vaporized fuel such as methanol or the like supplied from the fuel vaporizing layer 10 is contained in addition to the carbon dioxide gas generated at the anode catalyst layer 3.

Accordingly, when the generated gas discharged from the internal pressure releasing mechanism was returned to the side of the cathode catalyst layer 2 through the above guide tube 24, the vaporized fuel as discharged was recovered and reused. Namely, a combustion reaction of the vaporized fuel such as methanol or the like was taken place, so that it became possible to increase the cell output power due to a heat generated by the combustion reaction, and it becomes also possible to easily perform a start-up operation of the fuel cell at a low temperature, thus providing an effect of improving the start-up performance.

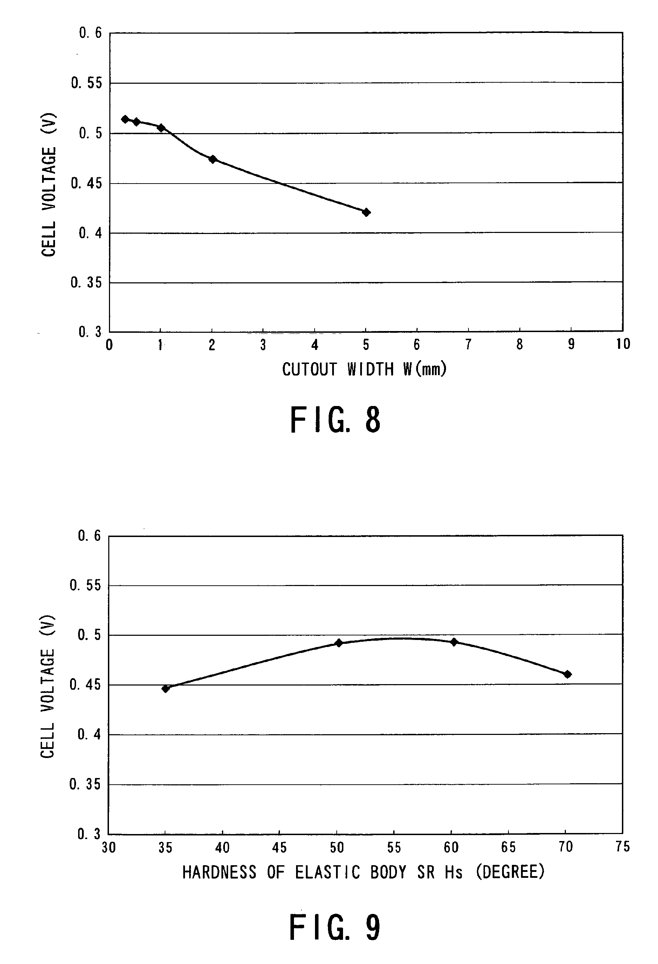

FIG. 8 is a graph showing a relationship between a width (W) of the cutout portion and a cell voltage in a case where the width (W) of the groove (cutout portion) 21 formed to the internal pressure releasing mechanism 20 shown in FIG. 3 was changed within a range of 0.3 to 5mm. As is clear from the results shown in FIG 8, when the width (W) of the groove (cutout portion) 21 exceeded 1 mm, a pressure could not be uniformly applied to the rectangular-shaped elastic body. As a result, it was confirmed that the cell voltage of the fuel cell operated under no-loaded condition was disadvantageously lowered.

FIG. 9 is a graph showing a relationship between a hardness (Hs) of the elastic body (silicon rubber (SR)) and a cell voltage in a case where the hardness of the elastic body constituting the internal pressure releasing mechanism 20b shown in FIG. 4 was changed within a range of 35° to 70°. As is clear from the results shown in FIG. 9, depending on the hardness of the silicon rubber (SR), there was a case where the pressure was not uniformly applied to portions of the slits 23. As a result, it was confirmed that the cell voltage of the fuel cell operated under no-loaded condition was disadvantageously lowered. In particular, when the hardness (Hs) of the silicon rubber (SR) as the elastic body was set to within the range of 40° to 60°, it was confirmed that the cell voltage of the fuel cell could be maintained to be high.

In this regard, although the present invention has been explained by taking the above embodiments and examples, the present invention is not limited thereto, and many other modifications can be made in the disclosed embodiments and examples of the present invention without departing from the scope of the present invention. Further, various inventions can be created by appropriately combining a plurality of the structural elements disclosed in the above embodiments and examples. For example, some structural elements can be omitted from all the structural elements disclosed in the respective examples. Furthermore, the structural elements selected from different embodiments can be appropriately combined thereby to create a modified invention.

## Claims

1. A fuel cell comprising:
a cathode catalyst layer;
an anode catalyst layer;
a proton conductive membrane disposed between the cathode catalyst layer and the anode catalyst layer;
a liquid fuel tank for storing a liquid fuel;
a fuel vaporizing layer for supplying a vaporized component of the liquid fuel to said anode catalyst layer; and
a vaporized fuel chamber formed between said fuel vaporizing layer and said anode catalyst layer;
wherein said vaporized fuel chamber is provided with an internal pressure releasing mechanism for discharging a generated gas including carbon dioxide gas, that is generated at said anode catalyst layer, from a side wall of the vaporized fuel chamber to outside a cell body.

2. The fuel cell according to claim 1, wherein said internal pressure releasing mechanism comprises: a cutout portion formed to the side wall of the vaporized fuel chamber; and an elastic body provided so as to be tightly contactable to said cutout portion.

3. The fuel cell according to claim 1, wherein said internal pressure releasing mechanism comprises: a groove formed to the side wall of the vaporized fuel chamber; and an elastic body provided so as to be tightly contactable to said groove.

4. The fuel cell according to claim 1, wherein said internal pressure releasing mechanism comprises: the side wall of the vaporized fuel chamber; an elastic body provided so as to be tightly contactable to said side wall; and a slit for discharging the generated gas accumulated in the vaporized fuel chamber to outside a cell body, said slit being formed so as to extend in a thickness direction of said elastic body.

5. The fuel cell according to claim 1, wherein said internal pressure releasing mechanism comprises: a groove formed to the side wall of the vaporized fuel chamber; an elastic body provided so as to be tightly contactable to said groove; and a slit for discharging the generated gas accumulated in the vaporized fuel chamber to outside a cell body, said slit being formed so as to extend in a thickness direction of said elastic body tightly contacted to said groove.

6. The fuel cell according to claim 1, wherein said elastic body has a hardness ranging from 40 °to 70°in terms of a hardness prescribed in Japanese Industrial Standard (JIS K 6301 A:1997).

7. The fuel cell according to claim 2, wherein said cutout portion formed to a side wall of the vaporized fuel chamber has a width of 1 mm or less.

8. The fuel cell according to claim 1, wherein said vaporized fuel chamber further comprises a guide tube for returning the generated gas discharged from said vaporized fuel chamber to a side of the cathode catalyst layer.
